# EUROPEAN PATENT SPECIFICATION

(11) **EP 4 518 306 B1**
(45) Date of publication and mention of the grant of the patent: **23.09.2026**
(21) Application number: 24189699.2
(22) Date of filing: 19.07.2024
(51) Int. Cl.: H04N 1/48

(54) **IMAGING DEVICE**
ABBILDUNGSVORRICHTUNG
DISPOSITIF D'IMAGERIE

(30) Priority: 28.08.2023 JP 2023138326
(43) Date of publication of application: 05.03.2025
(73) Proprietor: SCREEN Holdings Co., Ltd., Kyoto-shi, Kyoto 602-8585 (JP)
(72) Inventor: SUGIHARA, Yuya, Kyoto, 602-8585 (JP)
(74) Representative: Goddar, Heinz J.

(56) References cited:
- EP-A1- 3 247 098
- US-A1- 2021 314 451

## Description

### BACKGROUND OF THE INVENTION

### Field of the Invention

A subject matter disclosed in this specification relates to an imaging device.

### Description of the Background Art

Various inspections for printing quality, nozzle check, etc. have conventionally been conducted on the basis of image data obtained by photographing an image printed on a printing medium with a camera while transporting the printing medium in one direction. For example, the camera used in such a case is a line sensor that allows acquisition of an image of the printing medium as a whole in a time-series manner by photographing the printing medium in a single line pattern and performing the photographing continuously while moving the printing medium or the camera itself in a direction perpendicular to the line. As an example, Japanese Patent Application Laid-Open No. 2015-170888 discloses a technique of reading a document using a contact image sensor (CIS) as one type of the line sensor.

According to Japanese Patent Application Laid-Open No. 2015-170888, a CIS (101) of an image reader (100) includes an LED (201) as a light source, a light guide (202), a lens array (203), and a line sensor (204). The LED (201) is composed of LED elements to emit light of R (red), G (green), and B (blue) (paragraph 0016). In reading a color image, while the CIS (101) is moved back and forth in a sub-scanning direction, the LED (201) emits single-color light of R, single-color light of G, and single-color light of B sequentially, and the line sensor (204) receives diffused light from a document (paragraph 0018). A shading correction circuit (309) performs a filtering process on color component data about a pixel of interest output from the CIS (101) for filtering of a color shift value determined in the sub-scanning direction (abstract).

In moving the CIS (101) in the sub-scanning direction, however, change in a moving speed may cause error in correction result about the color component data pieces between the respective colors. This causes the risk of quality reduction when one image is generated thereafter by combining the component data pieces of the respective colors. US 2021/314451 A1 discloses: An image forming apparatus performs the following. An imaging range imaged by each of the plurality of imaging sensors includes an overlapping portion between the imaging sensors adjacent in a width direction orthogonal to a conveying direction along the conveying path. A hardware processor performs a calibration operation of a first sensor based on a color measuring result of a predetermined inspection image measured within a standard imaging range of the first sensor among the plurality of imaging sensors, and a standard imaging result within the standard imaging range imaging an inspection image with a same pattern as the inspection image. The hardware processor compares imaging results by the plurality of imaging sensors in the overlapping portions and performs the calibration operation of another sensor different from the first sensor using the standard imaging result as a standard.

### SUMMARY OF THE INVENTION

The present invention has been made in view of the foregoing circumstances. In performing photographing using an imaging device while moving a printing medium, the present invention is intended to provide a technique that makes it possible to reduce the occurrence of error between colors of respective color component data pieces output from the imaging device even if a moving speed of the printing medium changes.

The invention is set out in the appended claims. To solve the aforementioned problem, a first aspect of the present invention is intended for an imaging device comprising a transport mechanism, an encoder, a first color reading element, a second color reading element, a buffer, a first color averaging processor, and a second color averaging processor. The transport mechanism transports a printing medium along a transport path. The encoder outputs a pulse signal responsive to a transport speed of the printing medium transported by the transport mechanism. The first color reading element outputs a first color reading signal relating to a first color component in a fixed cycle by photographing the printing medium at a first imaging position on the transport path with imaging timing coinciding with the fixed cycle based on a driving signal generated in the fixed cycle. The second color reading element outputs a second color reading signal relating to a second color component in the fixed cycle by photographing the printing medium at a second imaging position on the transport path downstream from the first imaging position with imaging timing coinciding with the fixed cycle. The buffer is capable of storing a plurality of the first color reading signals output by the first color reading element and a plurality of the second color reading signals output by the second color reading element. The first color averaging processor performs an averaging process on the plurality of the first color reading signals stored in the buffer using a weight responsive to a time gap between a first transport signal based on the pulse signal and the driving signal. The second color averaging processor performs an averaging process on the plurality of the second color reading signals stored in the buffer using a weight responsive to a time gap between a second transport signal based on the pulse signal and the driving signal.

According to a second aspect of the present invention, the imaging device according to the first aspect further comprises a third color reading element that outputs a third color reading signal relating to a third color component in the fixed cycle by photographing the printing medium at a third imaging position on the transport path downstream from the second imaging position with imaging timing coinciding with the fixed cycle. The buffer is further capable of storing a plurality of the third color reading signals output by the third color reading element. The imaging device further comprises a third color averaging processor that performs an averaging process on the plurality of the third color reading signals stored in the buffer using a weight responsive to a time gap between a third transport signal based on the pulse signal and the driving signal.

According to a third aspect of the present invention, the imaging device according to the second aspect further comprises an image data output unit that outputs an image to an external device to conduct inspection on the image. The image is generated by superimposing a signal resulting from the averaging process by the first color averaging processor, a signal resulting from the averaging process by the second color averaging processor, and a signal resulting from the averaging process by the third color averaging processor on each other. The first transport signal based on the pulse signal is a pulsed time-series signal to rise each time the printing medium is transported over the first imaging position by a distance corresponding to one pixel represented by a resolution required for the inspection by the external device. The second transport signal based on the pulse signal is a pulsed time-series signal to rise each time the printing medium is transported over the second imaging position by a distance corresponding to one pixel represented by the resolution required for the inspection by the external device. The third transport signal based on the pulse signal is a pulsed time-series signal to rise each time the printing medium is transported over the third imaging position by a distance corresponding to one pixel represented by the resolution required for the inspection by the external device.

According to a fourth aspect of the present invention, the imaging device according to the second or third aspect comprises a line sensor including a plurality of the first color reading elements arranged in a width direction of the printing medium, a plurality of the second color reading elements arranged in the width direction, and a plurality of the third color reading elements arranged in the width direction.

According to the first to fourth aspects of the present invention, while the plurality of reading signals is obtained by photographing by the plurality of respective reading elements and at the plurality of respective imaging positions during transport of the printing medium, it is possible to perform the averaging process properly on these reading signals separately between the colors by referring to the pulse signal output from the encoder. By doing so, even if a transport speed of the printing medium changes, it still becomes possible to reduce the occurrence of error between the signals of the respective colors resulting from the averaging process, to be caused by a gap between the imaging positions.

### BRIEF DESCRIPTION OF THE DRAWINGS

Fig. 1 conceptually shows the configuration of a printing apparatus;
Fig. 2 shows a line sensor viewed from below; and
Fig. 3 is a graph showing a first transport signal, a second transport signal, a third transport signal, and a driving signal SC drawn in a time-series manner and arranged in parallel.

### DESCRIPTION OF THE PREFERRED EMBODIMENTS

A preferred embodiment of the present invention will be described below by referring to the drawings. Constituting elements in the preferred embodiment are described merely as examples, and the scope of the present invention is not to be limited only to these elements. To facilitate understanding, the size of each part or the number of such parts in the drawings may be illustrated in an exaggerated or simplified manner as needed.

### <1. Configuration of Printing Apparatus>

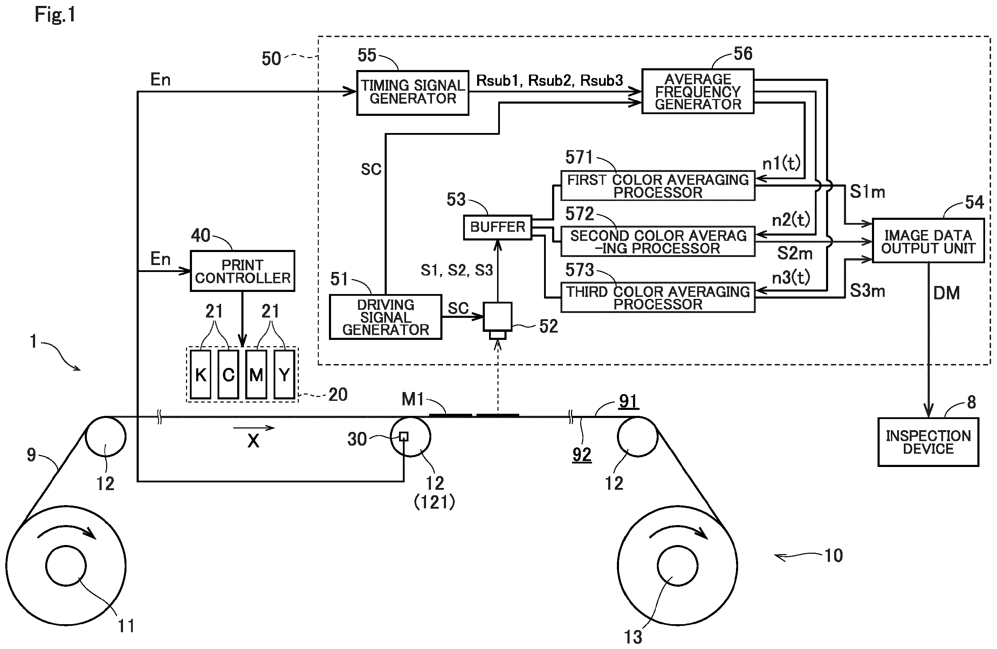

Fig. 1 conceptually shows the configuration of a printing apparatus 1 according to one embodiment of the present invention. The printing apparatus 1 records a character or an image on a printing surface 91 of the printing medium 9 by ejecting droplets of ink on the printing medium 9 by the inkjet method while transporting the printing medium 9. In the following, the character or image to be recorded on the printing surface 91 of the printing medium 9 will be called an "image M1." In this example, the printing medium 9 has an elongated strip shape (web shape). The printing medium 9 is printing paper, a film made of resin, or metal foil, for example. As shown in Fig. 1, the printing apparatus 1 includes a transport mechanism 10, a printing section 20, an encoder 30, a print controller 40, and an imaging device 50. The transport mechanism 10 and the encoder 30 can be considered to be parts of the imaging device 50.

The transport mechanism 10 continuously transports the printing medium 9 downstream from an upstream side along a prescribed transport path in a roll-to-roll system. The transport mechanism 10 has a plurality of rollers including an unwinding roller 11, a plurality of transport rollers 12, and a take-up roller 13. The unwinding roller 11, the plurality of transport rollers 12, and the take-up roller 13 are each rotatable about an axis parallel to a horizontal width direction Y of the printing medium 9 vertical to a transport direction X of the printing medium 9. The printing medium 9 is hung over these rollers while the printing medium 9 is under tension. This reduces sagging or creases of the printing medium 9 during transport.

The transport mechanism 10 further includes a motor (not shown in the drawings) for rotating at least one of the unwinding roller 11, the plurality of transport rollers 12, and the take-up roller 13. In the following, the roller to be rotated by the motor will be called a "driven roller." Driving the motor rotates all the rollers 11, 12, and 13 including the driven roller about axes parallel to the width direction Y of the printing medium 9. By doing so, the unwinding roller 11 continuously feeds the printing medium 9 wound in a roll shape on an outer peripheral surface of the unwinding roller 11. The transport rollers 12 are located at respective prescribed positions along the transport path. Each of the transport rollers 12 transports the printing medium 9 in the transport direction X fed from the unwinding roller 11 while supporting the printing medium 9 from a rear surface 92 opposite the printing surface 91. The take-up roller 13 takes up the printing medium 9 hung over each of the transport rollers 12 into a roll shape to collect the printing medium 9.

The printing section 20 prints the image M1 on the printing surface 91 of the printing medium 9 transported by the transport mechanism 10. The printing section 20 includes a plurality of printing heads 21 for ejection of ink droplets. In this example, these printing heads 21 include a printing head 21 for ejection of ink droplets of black (K), a printing head 21 for ejection of ink droplets of cyan (C), a printing head 21 for ejection of ink droplets of magenta (M), and a printing head 21 for ejection of ink droplets of yellow (Y) that are arranged in this order in the transport direction X while spaced from each other. The four printing heads 21 have configurations comparable to each other. The printing medium 9 moves under the four printing heads 21 substantially parallel to the arrangement direction of the four printing heads 21. At this time, the printing surface 91 of the printing medium 9 is pointed toward the printing heads 21. Namely, the printing surface 91 of the printing medium 9 is pointed upward.

The color of ink to be ejected from each printing head 21 is freely changeable. The printing section 20 may include a printing head 21 to eject ink of a color different from K, C, M, and Y. The number of the printing heads 21 of the printing section 20 may be one.

The printing head 21 has a surface, facing the printing surface 91 of the printing medium 9, provided with a plurality of ejection nozzles (not shown in the drawings) through which ink droplets are to be ejected. These ejection nozzles are arranged in the width direction Y perpendicular to the transport direction X. Ink droplets can be ejected from the printing head 21 to a range covering an entire area of the printing medium 9 in the width direction Y. Specifically, a range printable by the printing head 21 covers the entire area of the printing medium 9 in the width direction Y. The printing apparatus 1 is so-called a single-pass (one-pass) printing apparatus that prints the image M1 on the printing medium 9 by ejecting ink droplets from each of the printing heads 21 while the printing medium 9 passes through under the printing heads 21 only once.

The encoder 30 is a sensor for detecting a transport speed of the printing medium 9. The encoder 30 is mounted on a core of one of the plurality of transport rollers 12. The encoder 30 is mounted on a core of a transport roller 121 in Fig. 1. Each time the transport roller 121 rotates a predetermined angle, the encoder 30 outputs a pulse signal En once. Specifically, the encoder 30 outputs the pulse signal En responsive to the transport speed of the printing medium 9 transported by the transport mechanism 10. Thus, the pulse signal En functions as data reflecting change with time in the transport speed of the printing medium 9 transported by the plurality of transport rollers 12 including the transport roller 121.

The pulse signal En is input from the encoder 30 to each of the print controller 40 and a timing signal generator 55 of the imaging device 50 described later. The encoder 30 is simply required to be connected directly or indirectly to at least one of the plurality of transport rollers 12, and a destination of the connection thereof is not limited to the transport roller 121.

The print controller 40 controls the printing section 20. As an example, the print controller 40 is a computer including a processor such as a CPU, a memory such as a RAM, and an auxiliary storage device such as a hard disk drive. The print controller 40 may be composed of a dedicated electronic circuit such as an application-specific semiconductor integrated circuit (ASIC).

In response to input of the pulse signal En from the encoder 30, the print controller 40 specifies a position on the printing medium 9 where the image M1 is to be printed on the basis of the input pulse signal En. Then, on the basis of information about the image M1 and information about the position on the printing medium 9 where the image M1 is to be printed, the print controller 40 controls ejection of ink droplets from each nozzle of each of the printing heads 21.

This causes the four printing heads 21 to eject ink droplets of the respective colors to appropriate positions on the printing medium 9 in the transport direction X. As a result, the four printing heads 21 record respective single-color images on appropriate places on the printing surface 91 of the printing medium 9. Then, the four single-color images are superimposed on each other to form a high-quality multicolor image on the printing surface 91 of the printing medium 9.

The imaging device 50 photographs the image M1 printed on the printing medium 9 and outputs image data DM to an inspection device 8 as an external device. As an example, the imaging device 50 has a computer including a processor such as a CPU, a memory such as a RAM, and an auxiliary storage device such as a hard disk drive. The imaging device 50 reads a computer program and data from the auxiliary storage device into the memory, and causes the processor to operate on the basis of the read computer program and data. This makes progress in processing steps by the imaging device 50.

The inspection device 8 is a device to conduct inspection to see whether the image M1 is printed correctly by comparing the image data DM output from the imaging device 50 with a reference image, for example. The inspection device 8 may be a device to determine the presence or absence of density unevenness or a color hue in the image M1. Specifically, the inspection device 8 is simply required to be an external device to conduct inspection on the image M1.

### <2. Detailed Configuration of Imaging Device and Processing Steps by Imaging Device>

The following describes a detailed configuration of the imaging device 50 and processing steps by the imaging device 50. As shown in Fig. 1, the imaging device 50 of the present preferred embodiment includes a driving signal generator 51, a line sensor 52, a buffer 53, an image data output unit 54, the timing signal generator 55, an average frequency generator 56, a first color averaging processor 571, a second color averaging processor 572, and a third color averaging processor 573. The driving signal generator 51, the image data output unit 54, the timing signal generator 55, the average frequency generator 56, the first color averaging processor 571, the second color averaging processor 572, and the third color averaging processor 573 are parts of the functions of the imaging device 50, and are composed of hardware (FPGA, for example) configured using a logic circuit such as a dedicated circuit. The functions of these parts may be realized by software by causing a general-purpose processor such as a CPU to execute a program.

The driving signal generator 51 generates a pulsed driving signal SC in a fixed cycle T1. The driving signal SC is a signal for driving the line sensor 52 to photograph the image M1 printed on the printing medium 9. As shown in Fig. 1, the driving signal SC is input in the fixed cycle T1 to each of the line sensor 52 and the average frequency generator 56.

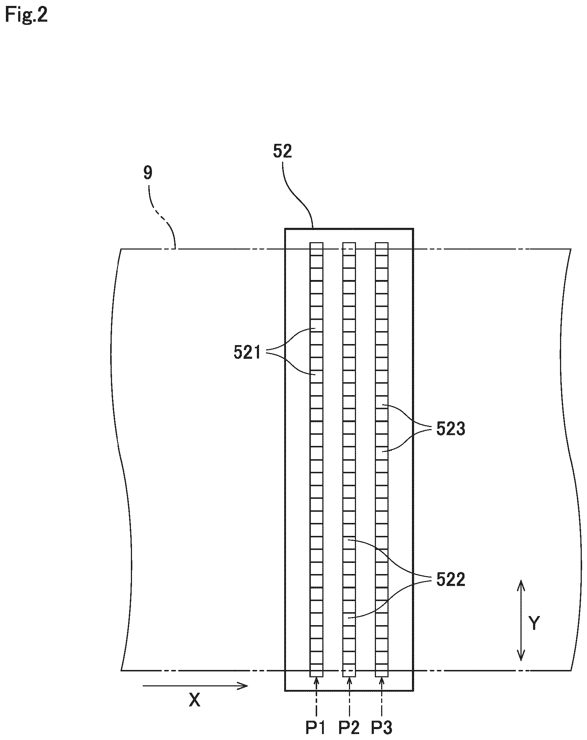

The line sensor 52 is a device for photographing the image M1 printed on the printing medium 9. The line sensor 52 is capable of photographing a range covering an entire area of the printing medium 9 in the width direction Y. A contact image sensor (CIS) is used as the line sensor 52 of the present preferred embodiment. Fig. 2 shows the line sensor 52 viewed from below. In Fig. 2, the printing medium 9 is represented by virtual lines (alternate long and two short dashes lines). As shown in Fig. 2, the line sensor 52 has a lower surface provided with a plurality of first color reading elements 521, a plurality of second color reading elements 522, and a plurality of third color reading elements 523.

All the first color reading elements 521 are arranged in a line in the width direction Y of the printing medium 9 at a first imaging position P1 on the transport path. All the second color reading elements 522 are arranged in a line in the width direction Y of the printing medium 9 at a second imaging position P2 on the transport path downstream from the first imaging position P1. All the third color reading elements 523 are arranged in a line in the width direction Y of the printing medium 9 at a third imaging position P3 on the transport path downstream from the second imaging position P2.

Specifically, the line sensor 52 includes the plurality of first color reading elements 521 arranged in the width direction Y of the printing medium 9, the plurality of second color reading elements 522 arranged in the width direction Y of the printing medium 9, and the plurality of third color reading elements 523 arranged in the width direction Y of the printing medium 9. These first color reading elements 521, second color reading elements 522, and third color reading elements 523 are arranged at intervals from each other in the transport direction X. Each of the first color reading elements 521, each of the second color reading elements 522, and each of the third color reading elements 523 are CCDs or CMOSs.

Each of the first color reading elements 521 is capable of reading light belonging to visible light and having a red color (R) as a first color component. In response to input of the driving signal SC from the driving signal generator 51, each of the first color reading elements 521 photographs the printing medium 9 at the first imaging position P1 on the transport path with imaging timing coinciding with a fixed cycle T2. By doing so, each of the first color reading elements 521 optically reads the red color (R) corresponding to the first color component from the image M1 on the printing medium 9, and outputs a first color reading signal S1 relating to the read red color (R) to the buffer 53 in the fixed cycle T2.

Specifically, each of the first color reading elements 521 photographs the printing medium 9 at the first imaging position P1 on the transport path with the imaging timing coinciding with the fixed cycle T2 based on the driving signal SC generated in the fixed cycle T1. By doing so, each of the first color reading elements 521 outputs the first color reading signal S1 relating to the first color component in the fixed cycle T2. The first color reading signal S1 is data representing a brightness value about the red color (R) component at the first imaging position P1 in the image M1 on the printing medium 9.

Each of the second color reading elements 522 is capable of reading light belonging to visible light and having a green color (G) as a second color component. In response to input of the driving signal SC from the driving signal generator 51, each of the second color reading elements 522 photographs the printing medium 9 at the second imaging position P2 on the transport path with the imaging timing coinciding with the fixed cycle T2. By doing so, each of the second color reading elements 522 optically reads the green color (G) corresponding to the second color component from the image M1 on the printing medium 9, and outputs a second color reading signal S2 relating to the read green color (G) to the buffer 53 in the fixed cycle T2.

Specifically, each of the second color reading elements 522 photographs the printing medium 9 at the second imaging position P2 on the transport path downstream from the first imaging position P1 with the imaging timing coinciding with the fixed cycle T2 based on the driving signal SC generated in the fixed cycle T1. By doing so, each of the second color reading elements 522 outputs the second color reading signal S2 relating to the second color component in the fixed cycle T2. The second color reading signal S2 is data representing a brightness value about the green color (G) component at the second imaging position P2 in the image M1 on the printing medium 9.

Each of the third color reading elements 523 is capable of reading light belonging to visible light and having a blue color (B) as a third color component. In response to input of the driving signal SC from the driving signal generator 51, each of the third color reading elements 523 photographs the printing medium 9 at the third imaging position P3 on the transport path with the imaging timing coinciding with the fixed cycle T2. By doing so, each of the third color reading elements 523 optically reads the blue color (B) corresponding to the third color component from the image M1 on the printing medium 9, and outputs a third color reading signal S3 relating to the read blue color (B) to the buffer 53 in the fixed cycle T2.

Specifically, each of the third color reading elements 523 photographs the printing medium 9 at the third imaging position P3 on the transport path downstream from the second imaging position P2 with the imaging timing coinciding with the fixed cycle T2 based on the driving signal SC generated in the fixed cycle T1. By doing so, each of the third color reading elements 523 outputs the third color reading signal S3 relating to the third color component in the fixed cycle T2. The third color reading signal S3 is data representing a brightness value about the blue color (B) component at the third imaging position P3 in the image M1 on the printing medium 9.

Specifically, the plurality of first color reading elements 521, the plurality of second color reading elements 522, and the plurality of third color reading elements 523 photograph the printing medium 9 concurrently with each other and in the fixed cycle T2, and output the first color reading signal S1, the second color reading signal S2, and the third color reading signal S3 respectively to the buffer 53. The fixed cycle T2 can be considered to substantially coincide with the fixed cycle T1 in which the driving signal generator 51 generates the driving signal SC.

A semiconductor memory is used as the buffer 53, for example. The buffer 53 is capable of temporarily storing a plurality of the first color reading signals S1 output from the plurality of first color reading elements 521, a plurality of the second color reading signals S2 output from the plurality of second color reading elements 522, and a plurality of the third color reading signals S3 output from the plurality of third color reading elements 523.

The image data output unit 54 outputs the image data DM to the inspection device 8 as an external device. As will be described later in detail, the image data DM is data about an image obtained by performing an averaging process on the plurality of first color reading signals S1, on the plurality of second color reading signals S2, and on the plurality of third color reading signals S3, and then superimposing resultant data on each other.

According to the present preferred embodiment, the inspection device 8 has an inspection resolution of 600 dpi, for example. Specifically, one pixel represented by the inspection resolution has a length of 42.3 µm (= 25.4 mm/600 dpi). For this reason, inspection on an image by the inspection device 8 requires photographed data about an image each having a length of 42.3 µm (corresponding to one pixel).

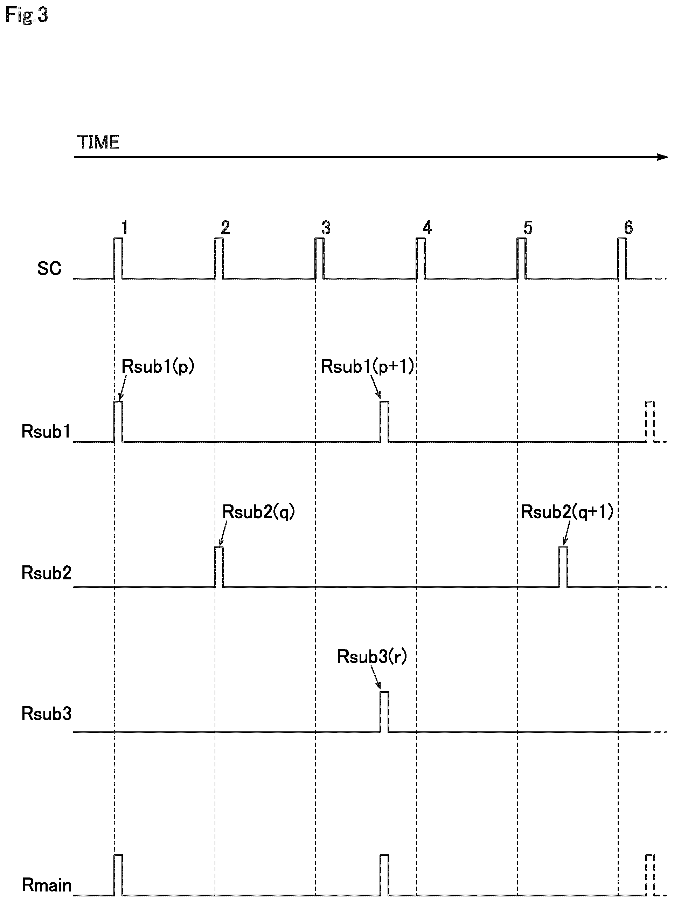

In this regard, the timing signal generator 55 first specifies the position of the printing medium 9 on the basis of the pulse signal En input from the encoder 30. Then, each time the printing medium 9 is transported under the line sensor 52 by a distance of 42.3 µm (corresponding to one pixel) in the transport direction X, the timing signal generator 55 generates a pulsed signal (see a "signal Rmain" in Fig. 3). In the present invention, each time the printing medium 9 is transported over each of the plurality of imaging positions P1 to P3 by the distance of 42.3 µm (corresponding to one pixel) in the transport direction X, the timing signal generator 55 generates different pulsed signals. This will be described next in detail.

First, on the basis of the pulse signal En input from the encoder 30, the timing signal generator 55 generates a pulsed first transport signal Rsub1 each time the printing medium 9 is transported over the first imaging position P1 by the distance of 42.3 µm (corresponding to one pixel) in the transport direction X, and outputs the first transport signal Rsub1 to the average frequency generator 56 (see Fig. 3). Specifically, the first transport signal Rsub1 based on the pulse signal En is a pulsed time-series signal to rise each time the printing medium 9 is transported over the first imaging position P1 by the distance corresponding to one pixel represented by the resolution required for the inspection by the inspection device 8.

Furthermore, on the basis of the pulse signal En input from the encoder 30, the timing signal generator 55 generates a pulsed second transport signal Rsub2 each time the printing medium 9 is transported over the second imaging position P2 by the distance of 42.3 µm (corresponding to one pixel) in the transport direction X, and outputs the second transport signal Rsub2 to the average frequency generator 56 (see Fig. 3). Specifically, the second transport signal Rsub2 based on the pulse signal En is a pulsed time-series signal to rise each time the printing medium 9 is transported over the second imaging position P2 by the distance corresponding to one pixel represented by the resolution required for the inspection by the inspection device 8.

Furthermore, on the basis of the pulse signal En input from the encoder 30, the timing signal generator 55 generates a pulsed third transport signal Rsub3 each time the printing medium 9 is transported over the third imaging position P3 by the distance of 42.3 µm (corresponding to one pixel) in the transport direction X, and outputs the third transport signal Rsub3 to the average frequency generator 56 (see Fig. 3). Specifically, the third transport signal Rsub3 based on the pulse signal En is a pulsed time-series signal to rise each time the printing medium 9 is transported over the third imaging position P3 by the distance corresponding to one pixel represented by the resolution required for the inspection by the inspection device 8.

Fig. 3 is a graph showing the first transport signal Rsub1, the second transport signal Rsub2, the third transport signal Rsub3 output from the timing signal generator 55, and the driving signal SC output from the driving signal generator 51 drawn in a time-series manner and arranged in parallel. Fig. 3 further shows the signal Rmain described above as a comparison target.

As described above, for conducting inspection on an image using the inspection device 8, photographed data about the image each having a length of 42.3 µm (corresponding to one pixel) is required. This may be realized by photographing the image M1 with timing of rises of respective pulses in the first transport signal Rsub1, the second transport signal Rsub2, and the third transport signal Rsub3, and then outputting the corresponding reading signals S1 to S3. Meanwhile, the plurality of first color reading elements 521, the plurality of second color reading elements 522, and the plurality of third color reading elements 523 actually photograph the printing medium 9 concurrently with each other and in the fixed cycle T2 different from the inspection resolution on the basis of the driving signal SC, and output the first color reading signal S1, the second color reading signal S2, and the third color reading signal S3 respectively.

Then, the average frequency generator 56 counts the number of times n1(t) the driving signal SC is input from the driving signal generator 51 between one pulse Rsub1(p) and a next pulse Rsub1(p+1) of the first transport signal Rsub1, and outputs result thereof as time-series data to the first color averaging processor 571. Each time the first transport signal Rsub1 is input to the average frequency generator 56, the average frequency generator 56 outputs results of the counting about the number of times n1(t) sequentially to the first color averaging processor 571. In the illustration in Fig. 3, the driving signal SC is input three times from 1 to 3 between the pulse Rsub1(p) and the next pulse Rsub1(p+1), so that the number of times n1(t) is determined to be 3.

Furthermore, the average frequency generator 56 counts the number of times n2(t) the driving signal SC is input from the driving signal generator 51 between one pulse Rsub2(q) and a next pulse Rsub2(q+1) of the second transport signal Rsub2, and outputs result thereof as time-series data to the second color averaging processor 572. Each time the second transport signal Rsub2 is input to the average frequency generator 56, the average frequency generator 56 outputs results of the counting about the number of times n2(t) sequentially to the second color averaging processor 572. In the illustration in Fig. 3, the driving signal SC is input four times from 2 to 5 between the pulse Rsub2(q) and the next pulse Rsub2(q+1), so that the number of times n2(t) is determined to be 4.

Furthermore, the average frequency generator 56 counts the number of times n3(t) the driving signal SC is input from the driving signal generator 51 between one pulse Rsub3(r) and a next pulse Rsub3(r+1) (not shown in Fig. 3) of the third transport signal Rsub3, and outputs result thereof as time-series data to the third color averaging processor 573. Each time the third transport signal Rsub3 is input to the average frequency generator 56, the average frequency generator 56 outputs results of the counting about the number of times n3(t) sequentially to the third color averaging processor 573.

Next, in response to input of the above-described number of times n1(t) from the average frequency generator 56, the first color averaging processor 571 reads the plurality of first color reading signals S1 from the buffer 53 having been stored in the above-described period between the pulse Rsub1(p) and the next pulse Rsub1(p+1), adds the read signals together, and divides result of the addition by the number of times n1(t). In the illustration in Fig. 3, the first color averaging processor 571 divides the result of the addition of the plurality of first color reading signals S1 having been stored in the period between the pulse Rsub1(p) and the next pulse Rsub1(p+1) by 3 (corresponding to the number of times n1(t)). Then, the first color averaging processor 571 outputs a first color average signal S1m representing result of the division to the image data output unit 54.

Specifically, the first color averaging processor 571 performs an averaging process on the plurality of first color reading signals S1 stored in the buffer 53 using a weight responsive to a time gap between the first transport signal Rsub1 based on the pulse signal En and the driving signal SC. The first color average signal S1m is an average of the first color reading signals S1 read by the plurality of first color reading elements 521 while the printing medium 9 is transported over the first imaging position P1 by the distance corresponding to one pixel. The first color reading signal S1 represents a brightness value about the red color (R) component in the image M1.

In response to input of the above-described number of times n2(t) from the average frequency generator 56, the second color averaging processor 572 reads the plurality of second color reading signals S2 from the buffer 53 having been stored in the above-described period between the pulse Rsub2(q) and the next pulse Rsub2(q+1), adds the read signals together, and divides result of the addition by the number of times n2(t). In the illustration in Fig. 3, the second color averaging processor 572 divides the result of the addition of the plurality of second color reading signals S2 having been stored in the period between the pulse Rsub2(q) and the next pulse Rsub2(q+1) by 4 (corresponding to the number of times n2(t)). Then, the second color averaging processor 572 outputs a second color average signal S2m representing result of the division to the image data output unit 54.

Specifically, the second color averaging processor 572 performs an averaging process on the plurality of second color reading signals S2 stored in the buffer 53 using a weight responsive to a time gap between the second transport signal Rsub2 based on the pulse signal En and the driving signal SC. The second color average signal S2m is an average of the second color reading signals S2 read by the plurality of second color reading elements 522 while the printing medium 9 is transported over the second imaging position P2 by the distance corresponding to one pixel. The second color reading signal S2 represents a brightness value about the green color (G) component in the image M1.

In response to input of the above-described number of times n3(t) from the average frequency generator 56, the third color averaging processor 573 reads the plurality of third color reading signals S3 from the buffer 53 having been stored in the above-described period between the pulse Rsub3(r) and the next pulse Rsub3(r+1), adds the read signals together, and divides result of the addition by the number of times n3(t). Then, the third color averaging processor 573 outputs a third color average signal S3m representing result of the division to the image data output unit 54.

Specifically, the third color averaging processor 573 performs an averaging process on the plurality of third color reading signals S3 stored in the buffer 53 using a weight responsive to a time gap between the third transport signal Rsub3 based on the pulse signal En and the driving signal SC. The third color average signal S3m is an average of the third color reading signals S3 read by the plurality of third color reading elements 523 while the printing medium 9 is transported over the third imaging position P3 by the distance corresponding to one pixel. The third color reading signal S3 represents a brightness value about the blue color (B) component in the image M1.

The image data output unit 54 generates the image data DM by adding the first color average signal S1m input from the first color averaging processor 571, the second color average signal S2m input from the second color averaging processor 572, and the third color average signal S3m input from the third color averaging processor 573. Then, the image data output unit 54 outputs the generated image data DM to the inspection device 8 as an external device. Specifically, the image data output unit 54 outputs the image data DM to the inspection device 8 that relates to an image resulting from superimposition of the first color average signal S1m, the second color average signal S2m, and the third color average signal S3m on each other. The first color average signal S1m is a signal resulting from the averaging process by the first color averaging processor 571. The second color average signal S2m is a signal resulting from the averaging process by the second color averaging processor 572. The third color average signal S3m is a signal resulting from the averaging process by the third color averaging processor 573. The inspection device 8 is an external device to conduct inspection on the image M1.

As described above, the image relating to the image data DM is generated by adding an average of the first color reading signals S1 read while the image M1 printed on the printing medium 9 is transported over the first imaging position P1 by the distance corresponding to one pixel, an average of the second color reading signals S2 read while the image M1 is transported over the second imaging position P2 by the distance corresponding to one pixel, and an average of the third color reading signals S3 read while the image M1 is transported over the third imaging position P3 by the distance corresponding to one pixel. Specifically, according to the printing apparatus 1 of the present preferred embodiment, while the plurality of reading signals S1, the plurality of reading signals S2, and the plurality of reading signals S3 are obtained by photographing by the plurality of reading elements 521 to 523 and at the plurality of imaging positions P1 to P3 respectively during transport of the printing medium 9, it is possible to perform the averaging process properly on these reading signals S1, S2, and S3 separately between the colors by referring to the pulse signal En output from the encoder 30.

By doing so, even if a transport speed changes while the printing medium 9 with the image M1 printed thereon is transported between the plurality of imaging positions P1 to P3, it still becomes possible to suppress influence on the plurality of reading signals S1 to S3. As a result, it becomes possible to reduce the occurrence of error between the signals S1m to S3m of the respective colors resulting from the averaging process, to be caused by the gap between the imaging positions P1 to P3. Thus, it is possible to obtain a high-quality image as a result of superimposition of the signals S1m to S3m of the respective colors after the averaging process.

### <3. Modifications>

While the preferred embodiment has been described hereinabove, the present invention is not limited to the foregoing preferred embodiment.

In the above-described preferred embodiment, the encoder 30 is used as a sensor for detecting a transport speed or the amount of transport of the printing medium 9. Instead of using the encoder 30, marks recorded on the printing medium 9 at a predetermined interval may be read using a camera, for example. Then, a transport speed or the amount of transport per a fixed period of the printing medium 9 may be calculated on the basis of time of the reading.

All the elements shown in the above-described preferred embodiment or modifications may be combined, as appropriate, within a range not causing inconsistency.

## Claims

1. An imaging device (50) comprising:
a transport mechanism (10) that transports a printing medium (9) along a transport path;
an encoder (30) that outputs a pulse signal (En) responsive to a transport speed of said printing medium (9) transported by said transport mechanism (10);
a first color reading element (521) that outputs a first color reading signal (S1) relating to a first color component in a fixed cycle (T2) by photographing said printing medium (9) at a first imaging position (P1) on said transport path with imaging timing coinciding with said fixed cycle (T2) based on a driving signal (SC) generated in said fixed cycle (T1);
a second color reading element (522) that outputs a second color reading signal (S2) relating to a second color component in said fixed cycle (T2) by photographing said printing medium (9) at a second imaging position (P2) on said transport path downstream from said first imaging position (P1) with imaging timing coinciding with said fixed cycle (T2);
a buffer (53) capable of storing a plurality of said first color reading signals (S1) output by said first color reading element (521) and a plurality of said second color reading signals (S2) output by said second color reading element (522); and
a timing signal generator (55) that generates a first transport signal (Rsub1) and a second transport signal (Rsub2), which are pulsed time-series signals, on the basis of said pulse signal (En);
**characterized by**:
a first color averaging processor (571) that performs an averaging process of dividing the result of the addition of the plurality of said first color reading signals (S1) having been stored in said buffer (53) during a first period between one pulse Rsub1(p) and a next pulse Rsub1(p+1) of said first transport signal (Rsub1), by the number of times the driving signal (SC) is output during the first period; and
a second color averaging processor (572) that performs an averaging process of dividing the result of the addition of the plurality of said second color reading signals (S2) having been stored in said buffer (53) during a second period between one pulse Rsub2(q) and a next pulse Rsub2(q+1) of said second transport signal (Rsub2), by the number of times the signal (SC) is output during the second period.

2. The imaging device (50) according to claim 1, further comprising:
a third color reading element (523) that outputs a third color reading signal (S3) relating to a third color component in said fixed cycle (T2) by photographing said printing medium (9) at a third imaging position (P3) on said transport path downstream from said second imaging position (P2) with imaging timing coinciding with said fixed cycle (T2), wherein
said buffer (53) is further capable of storing a plurality of said third color reading signals (S3) output by said third color reading element (523);
said timing signal generator (55) further generates a third transport signal (Rsub3), which is a pulsed time-series signal, on the basis of said pulse signal (En), and
the imaging device further comprises:
a third color averaging processor (573) that performs an averaging process of dividing the result of the addition of the plurality of said third color reading signals (S3) having been stored in said buffer (53) during a third period between one pulse Rsub3(r) and a next pulse Rsub3(r+1) of said third transport signal (Rsub3), by the number of times the driving signal (SC) is output during the third period.

3. The imaging device (50) according to claim 2, further comprising:
an image data output unit (54) that outputs an image to an external device to conduct inspection on said image, said image being generated by superimposing a signal resulting from the averaging process by said first color averaging processor (571), a signal resulting from the averaging process by said second color averaging processor (572), and a signal resulting from the averaging process by said third color averaging processor (573) on each other, wherein
said first period is a period required for the said printing medium (9) to be transported over said first imaging position (P1) by a distance corresponding to one pixel represented by a resolution required for said inspection by said external device,
said second period is a period required for the said printing medium (9) to be transported over said second imaging position (P2) by a distance corresponding to one pixel represented by a resolution required for said inspection by said external device, and
said third period is a period required for the said printing medium (9) to be transported over said third imaging position (P3) by a distance corresponding to one pixel represented by a resolution required for said inspection by said external device.

4. The imaging device (50) according to claim 2 or 3, comprising:
a line sensor (52) including a plurality of said first color reading elements (521) arranged in a width direction of said printing medium (9), a plurality of said second color reading elements (522) arranged in said width direction, and a plurality of said third color reading elements (523) arranged in said width direction.

## Patentansprüche

1. Abbildungsvorrichtung (50), umfassend:
einen Transportmechanismus (10), der ein Druckmedium (9) entlang eines Transportwegs transportiert;
einen Codierer (30), der ein Impulssignal (En) ausgibt, das auf eine Transportgeschwindigkeit des Druckmediums (9) anspricht, das von dem Transportmechanismus (10) transportiert wird;
ein erstes Farbleseelement (521), das ein erstes Farblesesignal (S1) ausgibt, das sich auf eine erste Farbkomponente in einem festen Zyklus (T2) bezieht, indem das Druckmedium (9) an einer ersten Abbildungsposition (P1) auf dem Transportweg fotografiert wird, wobei der Abbildungszeitpunkt mit dem festen Zyklus (T2) übereinstimmt, basierend auf einem Antriebssignal (SC), das in dem festen Zyklus (T1) erzeugt wird;
ein zweites Farbleseelement (522), das ein zweites Farblesesignal (S2) ausgibt, das sich auf eine zweite Farbkomponente in dem festen Zyklus (T2) bezieht, indem das Druckmedium (9) an einer zweiten Abbildungsposition (P2) auf dem Transportweg stromabwärts von der ersten Abbildungsposition (P1) fotografiert wird, wobei der Abbildungszeitpunkt mit dem festen Zyklus (T2) übereinstimmt;
einen Puffer (53), der in der Lage ist, eine Vielzahl der ersten Farblesesignale (S1), die von dem ersten Farbleseelement (521) ausgegeben werden, und eine Vielzahl der zweiten Farblesesignale (S2), die von dem zweiten Farbleseelement (522) ausgegeben werden, zu speichern; und
einen Zeitsignalgenerator (55), der ein erstes Transportsignal (Rsub1) und ein zweites Transportsignal (Rsub2), die gepulste Zeitreihensignale sind, auf der Basis des Impulssignals (En) erzeugt;
**gekennzeichnet durch**:
einen ersten Farbmittelungsprozessor (571), der einen Mittelungsprozess des Dividierens des Ergebnisses der Addition der Vielzahl der ersten Farblesesignale (S1), die in dem Puffer (53) während einer ersten Periode zwischen einem Impuls Rsub1(p) und einem nächsten Impuls Rsub1(p+1) des ersten Transportsignals (Rsub1) gespeichert wurden, durch die Anzahl der Male, die das Antriebssignal (SC) während der ersten Periode ausgegeben wird, durchführt; und
einen zweiten Farbmittelungsprozessor (572), der einen Mittelungsprozess des Dividierens des Ergebnisses der Addition der Vielzahl der zweiten Farblesesignale (S2), die in dem Puffer (53) während einer zweiten Periode zwischen einem Impuls Rsub2(q) und einem nächsten Impuls Rsub2(q+1) des zweiten Transportsignals (Rsub2) gespeichert wurden, durch die Anzahl der Male, die das Signal (SC) während der zweiten Periode ausgegeben wird, durchführt.

2. Abbildungsvorrichtung (50) nach Anspruch 1, ferner umfassend:
ein drittes Farbleseelement (523), das ein drittes Farblesesignal (S3) ausgibt, das sich auf eine dritte Farbkomponente in dem festen Zyklus (T2) bezieht, indem das Druckmedium (9) an einer dritten Abbildungsposition (P3) auf dem Transportweg stromabwärts von der zweiten Abbildungsposition (P2) fotografiert wird, wobei der Abbildungszeitpunkt mit dem festen Zyklus (T2) übereinstimmt, wobei
der Puffer (53) ferner in der Lage ist, eine Vielzahl der dritten Farblesesignale (S3), die von dem dritten Farbleseelement (523) ausgegeben werden, zu speichern;
der Zeitsignalgenerator (55) ferner ein drittes Transportsignal (Rsub3), das ein gepulstes Zeitreihensignal ist, auf der Basis des Impulssignals (En) erzeugt, und
die Abbildungsvorrichtung ferner umfasst:
einen dritten Farbmittelungsprozessor (573), der einen Mittelungsprozess des Dividierens des Ergebnisses der Addition der Vielzahl der dritten Farblesesignale (S3), die in dem Puffer (53) während einer dritten Periode zwischen einem Impuls Rsub3(r) und einem nächsten Impuls Rsub3(r+1) des dritten Transportsignals (Rsub3) gespeichert wurden, durch die Anzahl der Male, die das Antriebssignal (SC) während der dritten Periode ausgegeben wird, durchführt.

3. Abbildungsvorrichtung (50) nach Anspruch 2, ferner umfassend:
eine Bilddatenausgabeeinheit (54), die ein Bild an eine externe Vorrichtung ausgibt, um eine Inspektion an dem Bild durchzuführen, wobei das Bild durch Überlagern eines Signals, das aus dem Mittelungsprozess durch den ersten Farbmittelungsprozessor (571) resultiert, eines Signals, das aus dem Mittelungsprozess durch den zweiten Farbmittelungsprozessor (572) resultiert, und eines Signals, das aus dem Mittelungsprozess durch den dritten Farbmittelungsprozessor (573) resultiert, miteinander erzeugt wird, wobei
die erste Periode eine Periode ist, die erforderlich ist, damit das Druckmedium (9) über die erste Abbildungsposition (P1) über eine Entfernung transportiert wird, die einem Pixel entspricht, das durch eine Auflösung dargestellt wird, die für die Inspektion durch die externe Vorrichtung erforderlich ist,
die zweite Periode eine Periode ist, die erforderlich ist, damit das Druckmedium (9) über die zweite Abbildungsposition (P2) über eine Entfernung transportiert wird, die einem Pixel entspricht, das durch eine Auflösung dargestellt wird, die für die Inspektion durch die externe Vorrichtung erforderlich ist, und
die dritte Periode eine Periode ist, die erforderlich ist, damit das Druckmedium (9) über die dritte Abbildungsposition (P3) über eine Entfernung transportiert wird, die einem Pixel entspricht, das durch eine Auflösung dargestellt wird, die für die Inspektion durch die externe Vorrichtung erforderlich ist.

4. Abbildungsvorrichtung (50) nach Anspruch 2 oder 3, umfassend:
einen Zeilensensor (52), der eine Vielzahl der ersten Farbleseelemente (521), die in einer Breitenrichtung des Druckmediums (9) angeordnet sind, eine Vielzahl der zweiten Farbleseelemente (522), die in der Breitenrichtung angeordnet sind, und eine Vielzahl der dritten Farbleseelemente (523), die in der Breitenrichtung angeordnet sind, umfasst.

## Revendications

1. Dispositif d'imagerie (50) comprenant :
un mécanisme de transport (10) transportant un support d'impression (9) le long d'un chemin de transport ;
un codeur (30) émettant un signal impulsionnel (EN) sensible à une vitesse de transport dudit support d'impression (9) transporté par ledit mécanisme de transport (10) ;
un dispositif de lecture de première couleur (521) émettant un signal de lecture de première couleur (S1) se rapportant à une composante de première couleur dans un cycle fixe (T2) en photographiant ledit support d'impression (9) dans une première position d'imagerie (P1) sur ledit chemin de transport avec une synchronisation d'imagerie coïncidant avec ledit cycle fixe (T2) d'après un signal de commande (SC) généré dans ledit cycle fixe (T1) ;
un dispositif de lecture de deuxième couleur (522) émettant un signal de lecture de deuxième couleur (S2) se rapportant à une composante de deuxième couleur dans ledit cycle fixe (T2) en photographiant ledit support d'impression (9) dans une deuxième position d'imagerie (P2) sur ledit chemin de transport en aval de ladite première position d'imagerie (P1) avec une synchronisation d'imagerie coïncidant avec ledit cycle fixe (T2) ;
une mémoire tampon (53) en mesure de stocker une pluralité desdits signaux de lecture de première couleur (S1) émis par ledit dispositif de lecture de première couleur (521) et une pluralité desdits signaux de lecture de deuxième couleur (S2) émis par ledit dispositif de lecture de deuxième couleur (522) ; et
un générateur de signal de temporisation (55) générant un premier signal de transport (Rsub1) et un deuxième signal de transport (Rsub2), qui sont des signaux pulsés à série temporelle, d'après ledit signal impulsionnel (En) ;
**caractérisé par** :
un processeur de moyennage de première couleur (571) effectuant un processus de moyennage comportant la division du résultat de l'addition de la pluralité desdits signaux de lecture de première couleur (S1) stockés dans ladite mémoire tampon (53) au cours d'une première période entre une impulsion Rsub1(p) et une impulsion suivante Rsub1(p+1) dudit premier signal de transport (Rsub1), par le nombre d'émissions du signal de commande (SC) au cours de la première période ; et
un processeur de moyennage de deuxième couleur (572) effectuant un processus de moyennage comportant la division du résultat de l'addition de la pluralité desdits signaux de lecture de deuxième couleur (S2) stockés dans ladite mémoire tampon (53) au cours d'une deuxième période entre une impulsion Rsub2(p) et une impulsion suivante Rsub2(p+1) dudit deuxième signal de transport (Rsub2), par le nombre d'émissions du signal de commande (SC) au cours de la deuxième période.

2. Dispositif d'imagerie (50) selon la revendication 1, comprenant en outre :
un dispositif de lecture de troisième couleur (523) émettant un signal de lecture de troisième couleur (S3) se rapportant à une composante de troisième couleur dans ledit cycle fixe (T2) en photographiant ledit support d'impression (9) dans une troisième position d'imagerie (P3) sur ledit chemin de transport en aval de ladite deuxième position d'imagerie (P2) avec une synchronisation d'imagerie coïncidant avec ledit cycle fixe (T2),
ladite mémoire tampon (53) étant en outre capable de stocker une pluralité desdits signaux de lecture de troisième couleur (S3) émis par ledit élément de lecture de troisième couleur (523) ;
ledit générateur de signal de temporisation (55) générant en outre un troisième signal de transport (Rsub3), à savoir un signal pulsé à série temporelle, d'après ledit signal impulsionnel (En), et
le dispositif d'imagerie comprenant en outre :
un processeur de moyennage de troisième couleur (573) effectuant un processus de moyennage comportant la division du résultat de l'addition de la pluralité desdits signaux de lecture de troisième couleur (S3) stockés dans ladite mémoire tampon (53) au cours d'une troisième période entre une impulsion Rsub3(r) et une impulsion suivante Rsub3(r+1) dudit troisième signal de transport (Rsub3), par le nombre d'émissions du signal de commande (SC) au cours de la troisième période.

3. Dispositif d'imagerie (50) selon la revendication 2, comprenant en outre :
un dispositif d'émission de données image (54) émettant une image à un dispositif externe pour effectuer une inspection de ladite image, ladite image étant générée en superposant l'un sur l'autre un signal résultant du processus de moyennage par ledit processeur de moyennage de première couleur (571), un signal résultant du processus de moyennage par ledit deuxième processeur de moyennage de deuxième couleur (572), et un signal résultant du processus de moyennage par ledit processeur de moyennage de troisième couleur (573),
ladite première période étant une période requise pour le transport dudit support d'impression (9) au-dessus de ladite première position d'imagerie (P1) sur une distance correspondant à un pixel représenté par une résolution requise pour ladite inspection par ledit dispositif externe,
ladite deuxième période étant une période requise pour le transport dudit support d'impression (9) au-dessus de ladite deuxième position d'imagerie (P2) sur une distance correspondant à un pixel représenté par une résolution requise pour ladite inspection par ledit dispositif externe, et
ladite troisième période étant une période requise pour le transport dudit support d'impression (9) au-dessus de ladite troisième position d'imagerie (P3) sur une distance correspondant à un pixel représenté par une résolution requise pour ladite inspection par ledit dispositif externe.

4. Dispositif d'imagerie (50) selon la revendication 2 ou 3, comprenant :
un capteur linéaire (52) comprenant une pluralité desdits éléments de lecture de première couleur (521) disposés dans le sens de la largeur dudit support d'impression (9), une pluralité desdits éléments de lecture de deuxième couleur (522) disposés dans ledit sens de la largeur, et une pluralité desdits éléments de lecture de troisième couleur (523) disposés dans ledit sens de la largeur.
